Europäisches Patentamt

European Patent Office

Office européen des brevets

(19)

(11) **EP 1 187 413 A1**

(12) **EUROPEAN PATENT APPLICATION**

(43) Date of publication:
**13.03.2002 Bulletin 2002/11**

(51) Int Cl.$^7$: **H04L 27/26**

(21) Application number: **00119856.3**

(22) Date of filing: **12.09.2000**

(84) Designated Contracting States:
**AT BE CH CY DE DK ES FI FR GB GR IE IT LI LU MC NL PT SE**
Designated Extension States:
**AL LT LV MK RO SI**

(71) Applicant: **SIEMENS AKTIENGESELLSCHAFT 80333 München (DE)**

(72) Inventors:
• **Bolinth, Edgar**
  **41189 Moenchengladbach (DE)**
• **Grünheid, Rainer, Dr.**
  **21073 Hamburg (DE)**
• **Lombardi, Giancarlo, Dr.**
  **NL-2517 Den Haag (NL)**
• **Rohling, Hermann, Prof.**
  **38304 Wolfenbüttel (DE)**

(54) **Method for an adaptive bitloading in an OFDM communication system**

(57)    In the IST project BRAIN (Broadband Radio Access for IP based Networks), different enhancements for the HIPERLAN/2 air interface are studied with the goal to guarantee a certain Quality of Service (QoS) and to increase the bandwidth efficiency of the considered broadband system. In this paper, aspects of *adaptive modulation* are analysed in detail and a new loading algorithm is introduced which shows a slightly better performance and lower computational complexity compared to the well-known technique described in [1]. Furthermore, the loading algorithm is used in combination with a *blockwise* allocation of modulation levels to the subcarriers. This approach can result in a smaller signalling overhead in comparison with a subcarrier-specific modulation.

## FIG 1

$$SNR_{block,m_i} = 2$$

$$SNR_{block,m_{i+1}} = 4$$

| unused | BPSK | QPSK | 8-PSK | 16-QAM | 32-QAM | 64-QAM |

3 dB  4 dB  3,4 dB  2,4 dB  3 dB

S/N

EP 1 187 413 A1

**Description**

OFDM-based communication systems are used in powerline communication and HIPERLAN communication (see: R. van Nee and R. Prasad "OFDM Wireless Multimedia Commuications"; Artech House, ISBN 0-89006-530-6). HIPERLAN is the abbrevation of HIgh PERformance Radio Local Area Network. There are four types of HIPERLAN. The types 1 and 2 have the goal of mobile wireless networks, while the types 3 and 4 have the goal of stationary wireless networks. The types 2 to 4 are ATM-orientated. In an OFDM-based communication system it is possible to vary individually the modulation level of the subcarrier of the communication system by considering the signal-to-noise-distance of each subcarrier. The object of the bit and power allocation is done by special bitloading algorithms. One of these are well-known in the literature. The bitloading algorithms are distinguished each other by their optimization criteria (i.e. channel capacity, minimized bit error rate) and computational load (i.e. number of iterative computational steps, instruction for computing the number of bits, etc.).

Introduction

In recent years, activities in research on high-speed wireless LAN systems have resulted in the standardization of new W-LAN technologies, such as HIPERLAN/2 in Europe and IEEE 802.11a in the United States. In contrast to the 3G system UMTS, which supports high mobility and data rates up to 2 Mbit/s, the W-LAN systems aim at providing much higher data rates (e.g. up to 54 Mbit/s) in a smaller range for stationary and portable devices with limited mobility. Among the research projects investigating performance improvements for the HIPERLAN/2 system, the IST project BRAIN (Broadband Radio Access for IP based Networks) has the goal to jointly optimize all OSI layers of a broadband wireless communication system, using classical IP as a basis at the network layer and HIPERLAN/2 at the radio layers. Following a top-down approach, specific user requirements in terms of Quality od Service (QoS) are defined first which drive the development on the different layers [6] [7].
The physical layer of HIPERLAN/2 [5] is based on the Orthogonal Frequency Division Multiplexing (OFDM) technique. In this paper, an enhancement is proposed and analysed which is based on adaptive modulation strategies for the subcarriers of the OFDM system. Section II describes the principle of adaptive modulation for the OFDM transmission technique. Furthermore, the basic idea of the introduced simple loading algorithm is presented.
In section III, the performance of the proposed algorithm is analysed and discussed in detail. As it will be shown, the new loading technique has a similar or slightly better performance than the algorithm in [1], while leading to a lower computational complexity. In addition, the option of a *blockwise* allocation of modulation schemes can decrease the signalling overhead.

**Adaptive Modulation**

• *Principle*

In the HIPERLAN/2 system, the modulation level can be selected according to a link adaptation scheme. However, the modulation level is identical for all subcarriers in this case. In an OFDM system, it is possible to adjust the modulation level for each subcarrier individually. This method is normally referred to as *adaptive modulation.* The principle consists of allocating many bits to subcarriers with a high signal-to-noise ratio (SNR), whereas on subcarriers with low SNR only few or no bits at all are transmitted. The allocation of bits (and of transmit power) is performed by *loading algorithms* (e.g. [1],[2],[3]), which mainly differ in their optimization criteria and computational load. Here, the well-known algorithm of Chow et al. [1] is used as a reference. Applying such an adaptive modulation method, the bit error rate can be drastically reduced in the uncoded case compared to fixed modulation techniques.
The object forming the basis of the invention consists a method for an adaptive bitloading in an OFDM-based communication system, which enhances the quality of service and /or and the system-load of the communication system.
This object is achieved by the features specified in claim 1.
The main idea of the invention is to use the loading algorithm in combination with a blockwise allocation of modulation levels to the subcarriers. This approach can result in a smaller signalling overhead in comparison with a subcarrier-specific modulation.
In the IST-project BRAIN (Broadband Radio Access for IP based Networks), different enhancements for the HIPERLAN/2 air interface are studied with the goal to guarantee a certain Quality of Service (QoS) and to increase the bandwidth efficiency of the considered broadband system. In this paper, aspects of *adaptive modulation* are analysed in detail and a new loading algorithm is introduced which shows a slightly better performance and lower computational complexity compared to the well-known technique described in [1].
Further details of the invention are specified in the subclaims 2 to 7.

An embodiment of the invention will be explained in the following.

*• Considered Approach: Simple Blockwise Loading Algorithm (SBLA)*

In HIPERLAN/2, different physical (PHY) modes are defined (see [5]), each one comprising a modulation scheme (BPSK, QPSK, 16-QAM, 64-QAM) and a code rate (1/2, 3/4, 9/16). Thus, different bandwidth efficiencies are associated with the specified modes. To extend the table of possible modes towards adaptive modulation, it seems reasonable to propose alternative PHY modes which lead to a certain fixed bandwidth efficiency. This, in turn, requires the loading algorithm to allocate a fixed number of bits to the subcarriers. The algorithm of Chow et al. [1], which is used as a reference here, distributes the bits according to the channel capacity. A number of iterations is needed to make the allocated number of bits $R_{total}$ converge to the desired value $R_{target}$. If the condition $R_{total} = R_{target}$ is not fulfilled after a maximum number of iterations, $R_{total}$ is successively in- or decreased to ensure $R_{total} = R_{target}$. Finally, in a third step the transmit power is adjusted to compensate for the quantization of the number of bits.

Instead of the channel capacity, the algorithm of [2] uses a more plausible optimization criterion by minimising the bit error rate (BER), which is achieved if the error rates are equal on all subcarriers. This criterion has also been applied in the modified loading algorithm presented in [4], which showed comparable or better performance than the algorithm of Chow et al.

Here, a further simplification of the loading algorithm in [4] is proposed. Furthermore, it is combined with a blockwise allocation of modulation schemes. This *simple blockwise loading algorithm* (SBLA) is described in the following.

The given number of $K$ useful subcarriers is first divided into $n_B$ blocks of $b$ adjacent subcarriers. The goal of the loading algorithm is to find a modulation level $m_i$ for each block $i$ such that for a given bandwidth efficiency $E$ [net bit/subcarrier], a code rate $R$ and a given number of blocks $n_B$ the equation

$$\frac{R}{n_B} \sum_{i=0}^{n_B - 1} m_i = R \cdot m = E$$

is fulfilled, where m denotes the average modulation level. Assigning the same modulation level to adjacent subcarriers within one block is based on the observation that the channel transfer factors and consequently the SNR of neighboring subchannels are highly correlated in general.

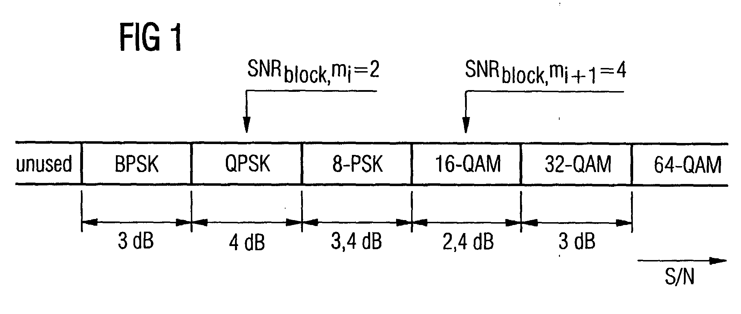

Each block is allocated a modulation level according to its (mean) SNR. To simplify the allocation compared to [1], SNR intervals for each modulation level are used. In contrast to [4], where the sizes of the SNR intervals as well as the absolute SNR thresholds are varied until the target bit rate is allocated, here *fixed* SNR interval sizes are applied. The size of these intervals is derived from the BER curves of the considered modulation schemes at a BER of $10^{-3}$. This way, an SNR grid is produced that is illustrated in Figure 1. The absolute position of this grid on the SNR axis, i. e. the absolute threshold value for each modulation scheme, is determined by calculating the mean SNR for the given channel and shifting the grid appropriately, taking into account the average modulation level $m$. It should be emphasized that the fixing of the SNR grid and thus the first allocation of bits is a procedure which does without any iterations.

If after this first loading step $R_{total} \neq R_{target}$, bits are successively added/subtracted, depending on the size of a block-SNR relative to the thresholds. This second step is identical to the one applied in the algorithm of Chow et al.

**Figure 1: SNR intervals for the allocation of modulation levels to subcarriers in the proposed algorithm. The absolute position of the grid is determined by the average modulation level $m$ and the average SNR.**

**Quantitative Analysis**

*• Computational Complexity*

To get a rough estimate of the expected computational complexity, especially in comparison with the one of Chow et al., the number of multiplications/divisions and comparisons is calculated in the following. Since the second algorithm step is identical in both cases (compensation of quantization errors), only the first step is considered.

On the assumption that the calculation of a logarithm is done by a power series of degree $d$, the estimates given in Table 1 result. Here it is assumed that $I$ iterations are needed for the algorithm of Chow et al.

From the numerical example, it becomes obvious that due to the high number of multiplications/ divisions for Chow et al., the computational load is expected to be much lower for the SBLA.

Table 1:

| Rough estimation of the computational complexity for the different loading algorithms; $K$ = number of subcarriers, $I$ = number of iterations, $d$ = degree of the power series used for calculation of the logarithm, $L$ = number of SNR thresholds. The numerical example is given by $K$ = 48, $I$ = 6, $d$ = 4, $n_B$ = 24, $L$ = 6 | | |
|---|---|---|
| | Chow et al. | SBLA |
| Number of multiplications/ divisions | $K \cdot I(2d-1)$<br>2016 | $n_B+1$<br>25 |
| Number of comparisons | --<br>0 | $K.L$<br>288 |

*• General Remarks for BER/PER Analysis*

To assess the performance of the proposed SBLA, simulations have been performed that are based on the HIPERLAN/2 system parameters. A number of $K$ = 48 useful subcarriers is chosen, and two different channel models are considered. The HIPERLAN/2 channel models A (typical office) and C (large open space) defined in ETSI BRAN are used for the quantitative analysis.

For the comparison, first the uncoded case is considered. In a second step, channel coding is applied. Here two "physical modes" are defined which correspond to 2 existing modes [5] with respect to their bandwidth efficiency (see Table 2). The calculation of the PDU error rate (PER) is based on the transmission of a long transport channel (LCH). Channel estimation and synchronization are assumed to be ideal.

Table 2:

| Choice of bandwidth efficiencies for adaptive modulation and corresponding H/2 PHY modes | | |
|---|---|---|
| $E$ [net bit/subc.] | Code rate $R$ | Corresponding H/2 PHY mode |
| 1 | 1/2 | QPSK, R = 1/2 |
| 3 | 3/4 | 16-QAM, R =3/4 |

When applying adaptive modulation, 7 different modulation schemes (unused, BPSK, QPSK, 8-PSK, 16-QAM, 32-QAM, 64-QAM), ranging from $m_i$ = 0 to $m_i$ = 6, are used.

*• Uncoded Case*

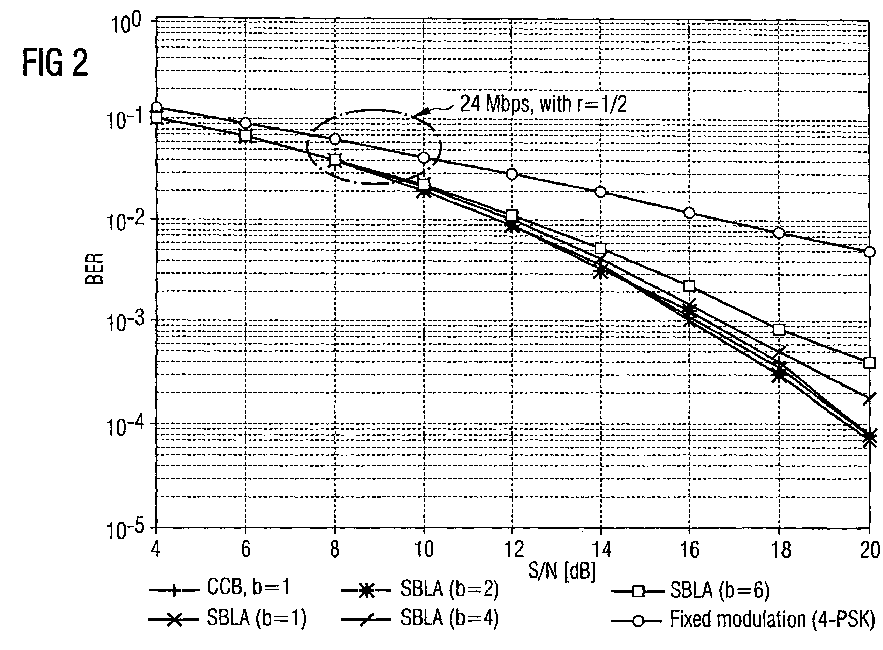

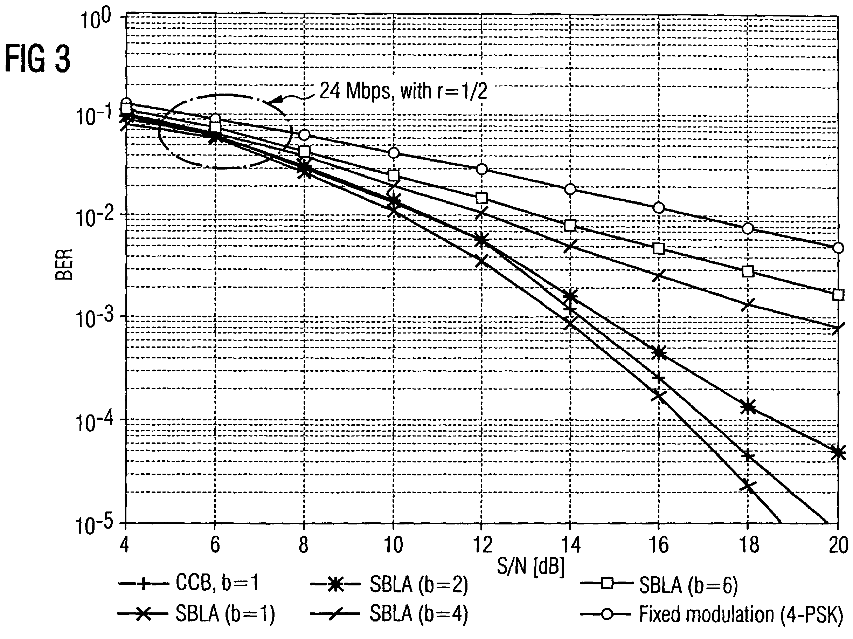

The first analysis shows the performance of the proposed adaptive modulation scheme for different block sizes $b$. As can be seen from Figure 2 and Figure 3, when considering a subcarrier-specific allocation ($b$ = 1), the SBLA shows a similar or even slightly better performance than the reference method of Chow et al. This is due to the different criteria (equal bit error rate instead of channel capacity) used for bit allocation. Although the proposed algorithm - because of its fixed SNR intervals - does not guarantee an equal BER on the subcarriers for any given SNR, the simplification still leads to goods performance results.

Furthermore, the influence of the block size $b$ can be seen in Figure 2 and Figure 3. For channel A, increasing $b$ only leads to a moderate increase in the BER even for a blocksize of $b$ = 4 (Figure 2). This can be explained by the small delay spread of that channel model which implies a high correlation of the channel transfer factors of adjacent subcarriers. Accordingly, the results of channel C (Figure 3) show that due to the larger delay spread of this channel, the considered block sizes have a more significant impact on the BER. In this case, values $b$ > 2 should be avoided.

**Figure 2: BER with adaptive modulation (proposed algorithm) and different block sizes $b$; channel model A (typical office), uncoded case. For comparison, the result for the algorithm of Chow et al. is also shown.**

**Figure 3: BER with adaptive modulation (proposed algorithm) and different block sizes $b$; channel model C (large open space), uncoded case. For comparison, the result for the algorithm of Chow et al. is also shown**

*• Coded Case*

After the principal analysis of the discussed loading algorithm, the coded case is to be considered. Two different examples with bandwidth efficiencies of $E$ = 1 net bit/subcarrier and $E$ = 3 net bit/subcarrier are applied, as already mentioned above. These new "physical modes" correspond to existing ones with respect to bandwidth efficiency, as listed in Table 2. The existing modes are also used for compariso

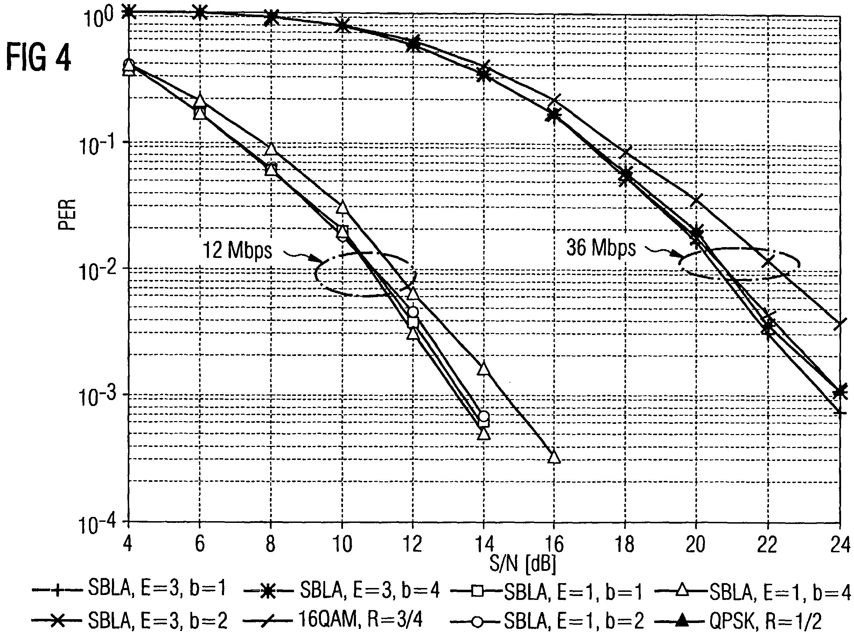

**Figure 4: PER with adaptive modulation (proposed algorithm) in the coded case for different block sizes *b*; channel model A (typical office). For *E* = 3 net bit/subc. (*E* = 1), a code rate of *R* = 3/4 (*R* = 1/2) is applied. For comparison, the curves of the two corresponding H/2 PHY modes are also shown.**

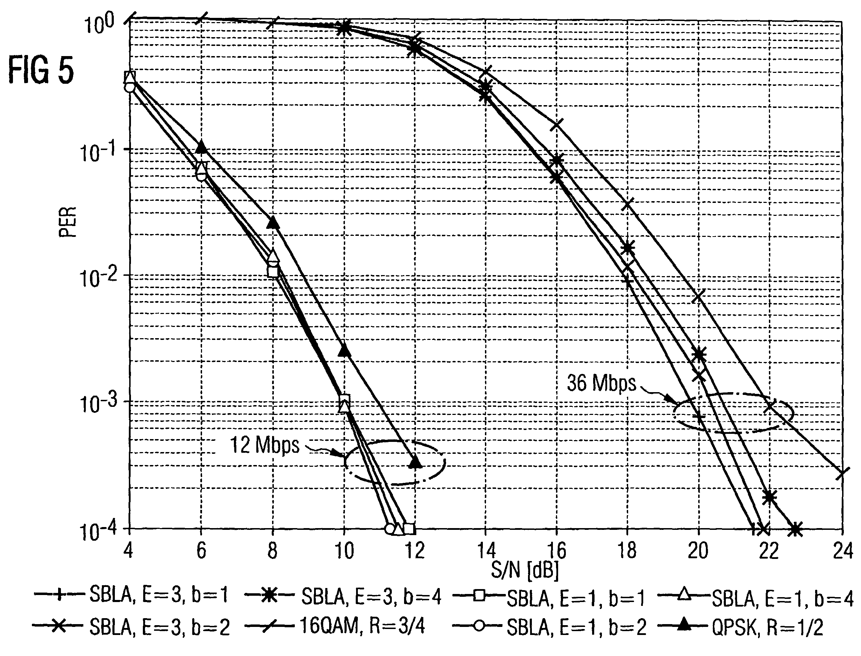

**Figure 5: PER with adaptive modulation (proposed algorithm) in the coded case for different block sizes *b*; channel model C (large open space). For *E* = 3 net bit/subc. (*E* = 1), a code rate of *R* = 3/4 (*R* = 1/2) is applied. For comparison, the curves of the two corresponding H/2 PHY modes are also shown.**

Figure 4 and Figure 5 summarize the results for channel model A and C, respectively. It can be noted that the gain for the adaptive modulation technique amounts to approx. 1 dB for *E* = 1 and 2 dB for *E* = 3, compared to a fixed modulation scheme (channel model C, BER of $10^{-3}$). Furthermore, after error correction the influence of a "coarse" allocation (*b* > 1) is only modest, so that the choice of *b* = 2 in both scenarios can be justified. In this case , the amount of signalling overhead for the allocation technique can be reduced.

## Conclusions

In this paper, adaptive modulation has been analysed as a possible enhancement for the HIPERLAN/2 air interface. The proposed simple blockwise loading algorithm (SBLA) was introduced and quantitatively analysed. It turns out that this algorithm, in spite of its simple structure, performs well and even gives slightly better results than the algorithm of Chow et al. used as a reference. Furthermore, the concept of a blockwise allocation appears to be suitable for the given scenario since it still leads to acceptable results while decreasing the signalling overhead necessary for transmitting the allocation information. In the coded case, the gain of an adaptive modulation strategy amounts to approx. 1 dB for *E* = 1 net bit/subcarrier and 2 dB for *E* = 3 net bit/subcarrier (BER of $10^{-3}$).

## Acknoledgements

This work has been performed in the framework of the IST project IST-1999-10050 BRAIN, which is partly funded by the European Union. The authors would like to acknowledge the contributions of their colleagues from Siemens AG, British Telecommunications PLC, Agora Systems S.A., Ericsson Radio Systems AB, France Télécom R&D, INRIA, King's College London, Nokia Corporation, NTT DoCoMo, Sony International (Europe) GmbH, and T-Nova Deutsche Telekom Innovationsgesellschaft mbH.

## References

[1] P.S. Chow, J.M. Cioffi, and J.A.C. Bingham: *A Practical Discrete Multitone Transceiver Loading Algorithm for Data Transmission over Spectrally Shaped Channels,* IEEE Transactions on Communications, 43, S. 773-775, February/March/April 1995

[2] Robert F.H. Fischer, Johannes B. Huber: *A New Loading Algorithm for Discrete Multitone Transmission*, *Proc. Globecomm 1996,* pp. 724-728

[3] D.Hughes-Hartogs: *Ensemble Modem Structure for Imperfect Transmission Media,* U.S. Patent No. 4679227 (July 1987), 4731816 (March 1988), 4833706 (May 1989)

[4] R. Grünheid, H. Rohling: *Comparison of Different Concepts for Adaptive Modulation in OFDM Systems,* Proc. 1st International OFDM Workshop, Hamburg, Germany, 1999

[5] ETSI DTS/BRAN-0023003, HIPERLAN Type 2 Technical Specification; Physical (PHY) layer, November 1999

[6] E. Bolinth, G. Lombardi, S. Hischke, T. Journe, B. Wegmann, R. Grünheid: *BRAIN Enhancements for the HIPERLAN/2 Air Interface to support QoS in Wireless Communications,* accepted for publication at IST Mobile Communciations Summit, Galway, 2000

[7] M. Pauli, B. Wegmann, A. Kadelka, A. Krämling, T. Bing: *First Performance Results of BRAIN,* accepted for publication at IST Mobile Communciations Summit, Galway, 2000

## Claims

**1.**  Method for an adaptive bitloading in an OFDM-based communication system, in which transmitter and receiver communicate to each other over a wireless and/or wired transmission channel comprising the following features:

Onto Subcarrier of the OFDM-based communication system, which are combined to blocks and which form totally an OFDM-symbol, a different amount of bits is adaptively allocated for each block by means of a bit loading algorithm evaluating the channel state information of the transmission channel such that all of the subcarriers combined in one block contain the same modulation level.

2. Method according to claim 1, **characterized in that** adjacent subcarrier of each block are combined.

3. Method according to claim 1 or 2, **characterized in that** the blocks forming the OFDM-symbol have a variable length.

4. Method according to one of the claims 1 to 3, **characterized in that** the bitloading algorithm works on a first optimization criteria, which has the goal of a maximum data rate, on a second optimization criteria, which has the goal of a minimum bit error rate, and/or on a third optimization criteria, which has the goal of a minimum signalling overhead by combining the subcarrier at the adaptive modulation.

5. Method according to one of the claims 1 to 4, **characterized in that**

(i) Determine once the the "signal to noise ratio"intervals for a raw "Bit Error Rate=$10^{-3}$", assuming "Additive White Gaussian Noise"-conditions,
(ii) Calculate the mean signal to noise ratio (over all subcarrier) and adjust the absolute "signal to noise ratio"-threshold according to the desired average modulation level "m" (i.e. the desired data rate),
(iii) Calculate with respect to figure 1 the mean blocksignal to noise ratio for all "$n_B$" blocks and select the block modulation level "$m_i$" according to the "signal to noise"-intervals
(iv) If the desired average modulation level "m" is unequal to the calculated average modulation level add/ subtract bits per block (i.e. same as for the "Chow, Cioffi, Bingham"-algorithm)

6. Method according to one of the claims 1 to 5, **characterized in that** the bitloading algorithm is in the transmitter and the receiver and the receiver transmit channel state information in the form of signal to noise ratios of each block to the transmitter.

7. Method according to one of the claims 1 to 5, **characterized in that** the bitloading algorithm is in the receiver and the receiver transmit bitloading information to the transmitter, whereas this information is interpreted in the receiver and the transmitter such that on each subcarrier of one block the same modulation level is used.

FIG 1

FIG 2

24 Mbps, with r=1/2

BER

S/N [dB]

—+— CCB, b=1    —✱— SBLA (b=2)    —☐— SBLA (b=6)

—✕— SBLA (b=1)    —∕— SBLA (b=4)    —○— Fixed modulation (4-PSK)

EP 1 187 413 A1

FIG 3

24 Mbps, with r=1/2

BER

S/N [dB]

—+— CCB, b=1    —*— SBLA (b=2)    —□— SBLA (b=6)

—✕— SBLA (b=1)    —/— SBLA (b=4)    —○— Fixed modulation (4-PSK)

EP 1 187 413 A1

FIG 4

EP 1 187 413 A1

FIG 5

**European Patent Office**

## EUROPEAN SEARCH REPORT

Application Number

EP 00 11 9856

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GRUENHEID R ET AL: "ADAPTIVE MODULATION AND MULTIPLE ACCESS FOR THE OFDM TRANSMISSION TECHNIQUE" WIRELESS PERSONAL COMMUNICATIONS, KLUWER ACADEMIC PUBLISHERS, NL, vol. 13, no. 1/02, May 2000 (2000-05), pages 5-13, XP000894156 ISSN: 0929-6212 | 1-4 | H04L27/26 |
| Y | * the whole document * | 5-7 | |
| Y | US 5 479 447 A (CIOFFI JOHN M ET AL) 26 December 1995 (1995-12-26) * abstract * * column 1, line 19 - line 42 * * column 2, line 43 - column 3, line 57 * * column 5, line 42 - column 6, line 14 * * column 7, line 35 - column 8, line 56 * * column 11, line 32 - column 12, line 6 * * claim 1 * * figure 5B * | 5-7 | |

TECHNICAL FIELDS SEARCHED (Int.Cl.7)

H04L

The present search report has been drawn up for all claims

| Place of search | Date of completion of the search | Examiner |
|---|---|---|
| THE HAGUE | 13 February 2001 | Toumpoulidis, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

**ANNEX TO THE EUROPEAN SEARCH REPORT
ON EUROPEAN PATENT APPLICATION NO.**

EP 00 11 9856

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2001

| Patent document cited in search report | Publication date | Patent family member(s) | Publication date |
|---|---|---|---|
| US 5479447 A | 26-12-1995 | NONE | |

EPO FORM P0459

For more details about this annex : see Official Journal of the European Patent Office, No. 12/82